# EUROPEAN PATENT APPLICATION

(11) **EP 4 470 801 A1**
(43) Date of publication of application: **04.12.2024**
(21) Application number: 24179374.4
(22) Date of filing: 31.05.2024
(51) Int. Cl.: B60C 29/00, B60C 29/04

(54) **BICYCLE INFLATION NOZZLE AND BICYCLE INNER TUBE**

(30) Priority: 03.06.2023 CN 202321396878 U
(71) Applicant: Foshan Lida Lisu New Material Co., Ltd., Foshan, Guangdong 528300 (CN)
(72) Inventor: LIU, Fusheng, Foshan, Guangdong, 528300 (CN)
(74) Representative: Cabinet Laurent & Charras

(57) **Abstract**

A bicycle inflation nozzle includes a TPU tube body; a TPU bottom plate provided at a lower end of the TPU tube body, and the TPU bottom plate and the TPU tube body being integrally formed; a metal cover provided at an upper end of the TPU tube body; a sleeve, a lower end of the sleeve being provided in the TPU tube body, and an upper end of the sleeve away from the TPU bottom plate extending through the metal cover; a screw rod, a lower end of the screw rod adjacent to the TPU bottom plate extending through the sleeve rod and being located in the TPU tube body, and an upper end of the screw rod away from the TPU bottom plate extending through the sleeve rod; and a nut threadedly connected to the upper end of the screw rod away from the TPU bottom plate.

## Description

### TECHNICAL FIELD

The present application relates to bicycles, and in particular to a bicycle inflation nozzle and a bicycle inner tube.

### BACKGROUND

In recent years, in the middle and high-end bicycle market, users have a strong demand for bicycles to reduce weight and enhance performance, which relates to bicycle inner tube. Conventional bicycle inner tubes are mostly made of butyl, which is heavy, has poor anti-puncture performance and large rolling resistance, so that there is an urgent need for an inflation nozzle and a thermoplastic polyurethane (TPU) bicycle inner tube. Chinese Patent Application No. 202222339688.9 discloses an inflation nozzle and a TPU bicycle inner tube. The inflation nozzle includes a threaded tube, a TPU bottom plate is provided at a lower end of the threaded tube, a limiting portion is provided on an inner wall of the threaded tube, and a screw rod is further provided in the threaded tube. An upper end of the screw rod extends out of the threaded tube, a sealing block is provided at a lower end of the screw rod, and the sealing block is provided at the limiting portion. An air guide nut is also threadedly connected to the upper end of the screw rod, an outer surface of the air guide nut is provided with an air guide port, and the air guide port is in communication with the threaded tube.

When the inflation nozzle is used for a period of time, the TPU bottom plate will be easily deformed due to the influence of temperature, so that a gap is easy to appear between the TPU bottom plate and an internally threaded member, which is prone to leakage problems.

### SUMMARY

An object of the present application is to provide a bicycle inflation nozzle and a bicycle inner tube that are capable of improving a sealing performance to address the above technical problem.

A bicycle inflation nozzle includes a TPU tube body; a TPU bottom plate provided at a lower end of the TPU tube body, and the TPU bottom plate and the TPU tube body being integrally formed; a metal cover provided at an upper end of the TPU tube body; a sleeve, a lower end of the sleeve being provided in the TPU tube body, and an upper end of the sleeve away from the TPU bottom plate extending through the metal cover; a screw rod, a lower end of the screw rod adjacent to the TPU bottom plate extending through the sleeve rod and being located in the TPU tube body, and an upper end of the screw rod away from the TPU bottom plate extending through the sleeve rod; and a nut threadedly connected to the upper end of the screw rod away from the TPU bottom plate.

In one of the embodiments, the TPU tube body is provided with a mounting cavity and an air inlet cavity that are in communication with each other, the screw rod is movably provided in the mounting cavity, and a middle portion of the TPU bottom plate is provided with a through hole in communication with the air inlet cavity.

In one of the embodiments, the mounting cavity is funnel-shaped.

In one of the embodiments, an outer surface of the sleeve is provided with a thread.

In one of the embodiments, the bicycle inflation nozzle further includes a first sealing ring, the sleeve is provided with a first annular groove, the first sealing ring is accommodated in the first annular groove, and an outer surface of the first sealing ring abuts against an inner wall of the TPU tube body.

In one of the embodiments, the bicycle inflation nozzle further includes a second sealing ring, a lower end of the screw rod adjacent to the TPU bottom plate is provided with a second annular groove, and the second sealing ring is accommodated in the second annular groove and is provided below the sleeve.

In one of the embodiments, a first gap is formed between an outer surface of the screw rod and the sleeve.

In one of the embodiments, an upper surface of the TPU bottom plate is smoothly connected to an outer surface of the TPU tube body.

A bicycle inner tube includes a TPU inflatable inner tube and the aforementioned bicycle inflation nozzle provided on the TPU inflatable inner tube.

According to the bicycle inflation nozzle and the bicycle inner tube, the TPU bottom plate and the TPU tube body are integrally formed, so that no gap is formed between the TPU bottom plate and the TPU tube body during use, and the sealing performance is improved. The metal cover provided on the upper end of the TPU tube body is not easily deformed by high temperature, so that a space between the TPU tube body and the sleeve is sealed, which is also conducive to improving the sealing performance.

### BRIEF DESCRIPTION OF THE DRAWINGS

FIG. 1 is a perspective view of a bicycle inflation nozzle according to an embodiment.
FIG. 2 is similar to FIG. 1, but viewed from another aspect.
FIG. 3 is a cross-sectional view of the bicycle inflation nozzle of FIG. 1 when an inner tube is inflated through the bicycle inflation nozzle.

Reference signs:

TPU tube body 1, mounting cavity 101, air inlet cavity 102, metal cover 2, screw rod 3, thread 301, first sealing ring 302, second sealing ring 303, sleeve 304, nut 4, TPU bottom plate 5, through hole 51, first annular groove 305, second annular groove 306, first gap 307, second gap 308.

### DETAILED DESCRIPTION OF THE EMBODIMENTS

The technical solution in the embodiment of the present application will be clearly and completely described below in conjunction with the drawings in the embodiment of the application. Apparently, the described embodiments are only some of the embodiments of the application, not all of them. Based on the embodiments in the present application, all other embodiments obtained by a person skilled in the art without making creative efforts shall all fall within the protection scope of the present application.

In the drawings of the embodiments of the present disclosure, the same or similar numbers correspond to the same or similar components. In the description of the present disclosure, it should be understood that terms "upper", "lower", "front" and "rear", "left", "right", "vertical", "horizontal", "lateral", "longitudinal", "top", "bottom", "inner", "outer", and other indicated orientation or positional relationships are based on the orientation or positional relationship shown in the drawings for convenience and simplicity of description of the present disclosure only, and not as an indication or implication that the devices or elements referred to must have or be constructed or operated in a specific orientation. Therefore, the terms describing positional relationships in the drawings are only for illustrative purposes and should not be construed as limitations of the present disclosure.

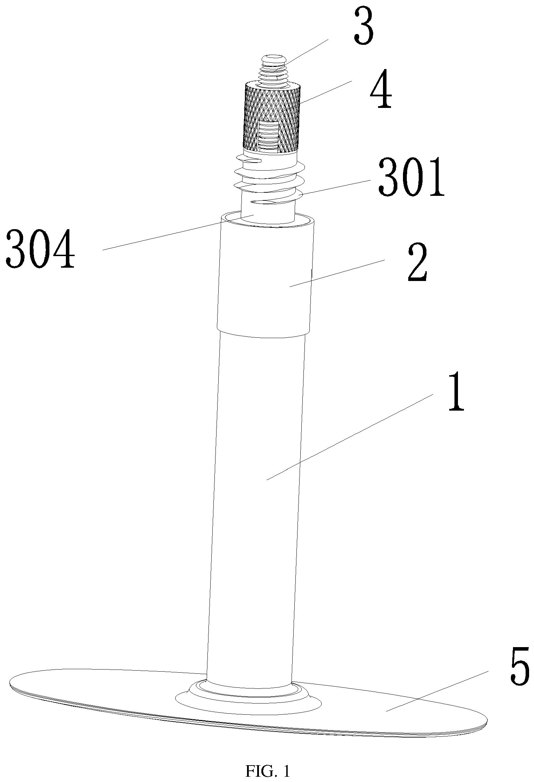

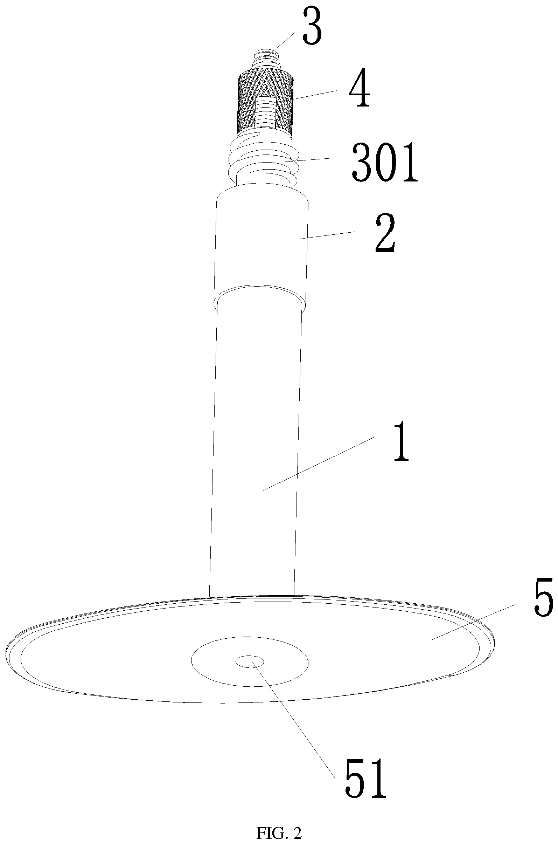

Referring to FIG. 1 to FIG. 3, a bicycle inflation nozzle according to an embodiment includes a TPU tube body 1, a metal cover 2, a sleeve 304, a screw rod 3, a nut 4, and a TPU bottom plate 5. The TPU bottom plate 5 is provided at a lower end of the TPU tube body 1, and the TPU bottom plate 5 and the TPU tube body 1 are integrally formed. The metal cover 2 is provided at an upper end of the TPU tube body 1. A lower end of the sleeve 304 adjacent to the TPU bottom plate 5 is provided in the TPU tube body 1, and an upper end of the sleeve 304 away from the TPU bottom plate 5 extends through the metal cover 2. A lower end of the screw rod 3 adjacent to the TPU bottom plate 5 extends through the sleeve rod 304 and is located in the TPU tube body 1, and an upper end of the screw rod 3 away from the TPU bottom plate 5 extends through the sleeve rod 304. The nut 4 is threadedly connected to the upper end of the screw rod 3 away from the TPU bottom plate 5.

According to the aforementioned bicycle inflation nozzle, the TPU bottom plate 5 and the TPU tube body 1 are integrally formed, so that no gap is formed between the TPU bottom plate 5 and the TPU tube body 1 during use, and the sealing performance is improved. The metal cover 2 is provided on the upper end of the TPU tube body 1 and is not easily deformed by high temperature, so that a space is formed between the TPU tube body 1 and the sleeve 304 is sealed, which is also conducive to improving the sealing performance.

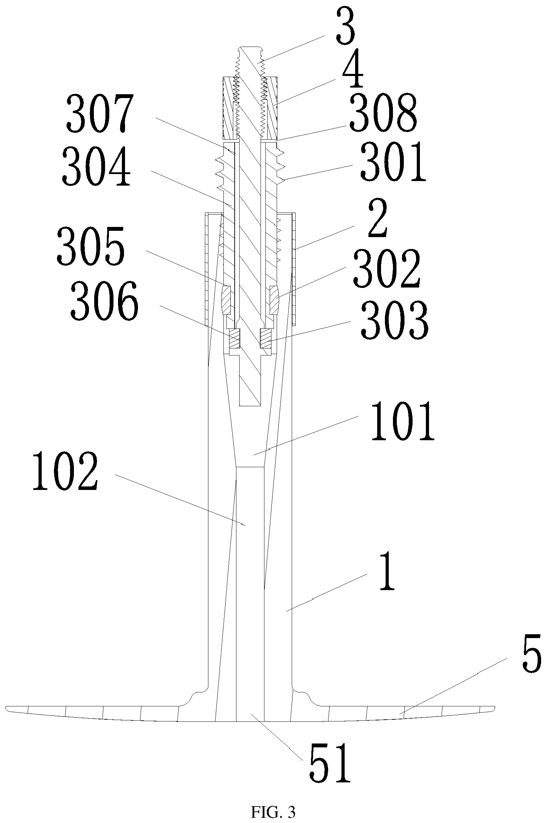

Referring to FIG. 3, the TPU tube body 1 is provided with a mounting cavity 101 and an air inlet cavity 102 that are in communication with each other. The mounting cavity 101 may be funnel-shaped. A middle portion of the TPU bottom plate 5 is provided with a through hole 51 in communication with the air inlet cavity 102. Air can sequentially flow through the mounting cavity 101 and the air inlet cavity 102, and enter an inner tube of a bicycle from the through hole 51.

An outer surface of the sleeve 304 is provided with a first annular groove 305. The bicycle inflation nozzle further includes a first sealing ring 305 accommodated in the first annular groove 305. An outer surface of the first sealing ring 302 abuts against an inner wall of the TPU tube body 1, thus further forming a seal between the TPU tube body 1 and the sleeve 304.

A first gap 307 is formed between an outer surface of the screw rod 3 and the sleeve 304. When the bicycle inflation nozzle is not in use, the nut 4 is in contact with the upper end of the sleeve 304, and the lower end of the screw rod 3 adjacent to the TPU bottom plate 5 is located at a predetermined position of the TPU tube body 1. In this embodiment, the end of the screw rod 3 adjacent to the TPU bottom plate 5 is supported on an inner wall of the funnel-shaped mounting cavity 101, so as to prevent the screw rod 3 from falling into the air inlet cavity 102. In an embodiment, an inner surface of the TPU tube body 1 is provided a protrusion, and the lower end of the screw rod 3 adjacent to the TPU bottom plate 5 is supported by the protrusion. When the bicycle inflation nozzle is used to inflate an inner tube, the nut 4 is rotated to form a second gap 308 between the nut 4 and the upper end of the sleeve 304, so that air can enter the first gap 307 from the second gap 308. The bicycle inflation nozzle further includes a second sealing ring 303. The lower end of the screw rod 3 adjacent to the TPU bottom plate 5 is provided with a second annular groove 306. The second sealing ring 303 is accommodated in the second annular groove 306 and is provided below the sleeve 304. Air can enter the mounting cavity 101 from the gap 307, and then enter the inner tube of the bicycle through the air inlet cavity 102 and the through hole 51. The lower end of the screw rod 3 adjacent to the TPU bottom plate 5 is movably provided in the mounting cavity 101, and can move in a direction away from the TPU base plate 5 under the action of an air pressure difference when an air pressure of the inner tube of the bicycle is greater than an external air pressure, so that the second sealing ring 303 abuts against the sleeve 304, thereby forming a seal between the screw rod 3 and the sleeve 304.

The TPU bottom plate 5 may be shaped as circular or square or oval. An upper surface of the TPU bottom plate 5 is smoothly connected to an outer surface of the TPU tube body 1.

The outer surface of the sleeve 304 is further provided with a thread 301 configured to be connected to a protecting cover (not shown), so as to prevent air from being discharged from the sleeve 304 when inflation is completed.

A bicycle inner tube is further provided according to an embodiment of the present applicant. The bicycle inner tube includes a TPU inflatable inner tube and the aforementioned bicycle inflation nozzle provided on the TPU inflatable inner tube. The TPU bottom plate 5 and the TPU inflatable inner tube may be welded by ultrasonic wave, so as to fix a position of the TPU tube body, which is convenient for daily use.

When an air pump inflates the TPU inflatable inner tube through the bicycle inflation nozzle, and an air pressure in the TPU inflatable inner tube is greater than an external air pressure, the second sealing ring 303 is driven to move upwards under the action of an air pressure difference between the air pressure of the inner tube of the bicycle and the external air pressure, then the second sealing ring 303 abuts against at a bottom surface of the sleeve 304, therefore forming a seal between the sleeve 304 and the screw 3. In this way, sufficient time can be provided to tighten the nut 4 to enable the nut 4 to be in contact with the upper end of the sleeve 304, so as to fix positions of the second sealing ring 303 and the screw rod 3 and prevent the air from being discharged from the sleeve 304.

## Claims

1. A bicycle inflation nozzle, comprising:
a TPU tube body (1);
a TPU bottom plate (5) provided at a lower end of the TPU tube body (1), and the TPU bottom plate (5) and the TPU tube body (1) being integrally formed;
a metal cover (2) provided at an upper end of the TPU tube body (1);
a sleeve (304), a lower end of the sleeve (304) adjacent to the TPU bottom plate (5) being provided in the TPU tube body (1), and an upper end of the sleeve (304) away from the TPU bottom plate (5) extending through the metal cover (2);
a screw rod (3), a lower end of the screw rod (3) adjacent to the TPU bottom plate (5) extending through the sleeve rod (304) and being located in the TPU tube body (1), and an upper end of the screw rod (3) away from the TPU bottom plate (5) extending through of the sleeve rod (304); and
a nut (4) threadedly connected to the upper end of the screw rod (3) away from the TPU bottom plate (5).

2. The bicycle inflation nozzle according to claim 1, wherein the TPU tube body (1) is provided with a mounting cavity (101) and an air inlet cavity (102) that are in communication with each other, the screw rod (3) is movably provided in the mounting cavity (101), and a middle portion of the TPU bottom plate (5) is provided with a through hole (51) in communication with the air inlet cavity (102).

3. The bicycle inflation nozzle according to claim 1, wherein the mounting cavity (101) is funnel-shaped.

4. The bicycle inflation nozzle according to claim 1, wherein an outer surface of the sleeve (304) is provided with a thread (301).

5. The bicycle inflation nozzle according to claim 1, further comprising a first sealing ring (302), wherein an outer surface of the sleeve (304) is provided with a first annular groove (305), the first sealing ring (305) is accommodated in the first annular groove (305), and the first sealing ring (302) abuts against an inner wall of the TPU tube body (1).

6. The bicycle inflation nozzle according to claim 1, further comprising a second sealing ring (303), wherein the lower end of the screw rod (3) adjacent to the TPU bottom plate (5) is provided with a second annular groove (306), and the second sealing ring (303) is accommodated in the second annular groove (306) and is provided below the sleeve (304).

7. The bicycle inflation nozzle according to claim 1, wherein a first gap (307) is formed between an outer surface of the screw rod (3) and the sleeve (304).

8. The bicycle inflation nozzle according to claim 1, wherein an upper surface of the TPU bottom plate (5) is smoothly connected to an outer surface of the TPU tube body (1).

9. A bicycle inner tube, comprising a TPU inflatable inner tube and the bicycle inflation nozzle according to any one of claim 1 to claim 8 provided on the TPU inflatable inner tube.
